# EUROPEAN PATENT SPECIFICATION

(11) **EP 1 716 914 B1**
(45) Date of publication and mention of the grant of the patent: **22.07.2009**
(21) Application number: 06252241.2
(22) Date of filing: 26.04.2006
(51) Int. Cl.: B01D 63/02, B01D 65/08, B01D 61/20

(54) **Hollow fibre filtration device with aeration tubes**
Hohlfaser-Filtrationsvorrichtung mit Begasungsrohren
Dispositif de filtration à fibres creusés avec des tubes d'aération

(30) Priority: 27.04.2005 JP 2005129719
(43) Date of publication of application: 02.11.2006
(73) Proprietor: Maezawa Industries, Inc, Chuo-ku Tokyo 104-8351 (JP); Sumitomo Electric Fine Polymer, Inc., Sennan-gun, Osaka 590-0458 (JP)
(72) Inventor: Suzuki, Tatsuhiko c/o Maezawa Industries, Inc., Tokyo 104-8351 (JP); Morita, Tooru c/o Sumitomo Electric Fine Polymer, Inc., Sennan-gun, Osaka 590-0458 (JP); Ida, Kiyoshi c/o Sumitomo Electric Fine Polymer, Inc., Sennan-gun, Osaka 590-0458 (JP)
(74) Representative: Cross, Rupert Edward Blount

(56) References cited:
- WO-A-00/30742
- JP-A- 7 185 268
- US-A- 5 783 083
- PATENT ABSTRACTS OF JAPAN vol. 2000, no. 05, 14 September 2000 (2000-09-14) -& JP 2000 051670 A (MITSUBISHI RAYON CO LTD), 22 February 2000 (2000-02-22)

## Description

### Technical Field

The present invention relates to a filtration device, more particularly to a filtration device which performs solid-liquid separation by allowing a liquid to be treated containing suspension components to permeate a membrane module, and especially to a filtration device provided with an air diffuser which performs air bubbling with bubbles from a plurality of diffuser tubes.

### Background Art

Membrane modules as a catchment portion in which a plurality of hollow fiber membranes are disposed in a bundled manner with its one end or both ends fixed to a fixed member in an open state are used being attached to an immersion type suction filtration device or an external pressure type filtration device. Conventionally, membrane modules have been widely used in a field of what is called microfiltration such as purification of river water or lake water. Recently, not limited to the field of water purification, much consideration has been given to the application thereof for the treatment of highly polluted water such as filtration of secondary and tertiary treatments of sewage, drainage, industrial waste water, industrial water, etc. In any case of the water purification and the treatment of highly polluted water, the continuation of filtration treatment by means of a filtration device using a membrane module leads to deposition of suspension components contained in a liquid to be treated on the surface of membranes or between membranes, which becomes the cause of blockage of membranes. That is, hollow fiber membranes are attached together to be integrated via deposits so that the effective membrane area of the hollow fiber membrane inside the membrane module is decreased, thereby lowering the permeation flow rate.

Thus, cleaning operation is performed for removing the deposits on the surface of membranes periodically. As the cleaning operation, a process is performed which introduces air from the lower part of the membrane module in a state where an immersion tank is filled with a liquid to be treated and separates deposits on the surface of membranes by means of air bubbling which gives vibration to hollow fiber membranes with provided bubbles.

As methods of the air bubbling, there are known: a device for separating deposits on a membrane surface (see, e.g., Japanese Patent No. 3014248) in which sheet-like planar hollow fiber membrane modules are disposed such that the sheet face is in the vertical direction and the hollow fiber membrane is in the horizontal direction, and a diffuser plate having diffuser openings is provided, with only the hollow fiber membranes being vibrated by means of air bubbling; a device for separating deposits on membrane surface (see, e.g., Japanese Laid-Open Patent (kokai) Publication No. Hei 8-215548) which, in a state where one end or both ends of the hollow fiber membrane is/are open, obtains catchment function by being fixed by a fixing member and performs air bubbling by providing diffuser openings on one end (lower end); a device for separating deposits on a membrane surface (see, e.g., Japanese Patent Publication No. Hei 7-61420) which introduces air from the lower part of a porous pipe inserted into the bundle of hollow fibers in which a multiplicity of hollow fibers are aligned inside an outer casing and vibrates the hollow fibers while raising bubbles along the porous pipe, so as to perform air bubbling; and so on.

However, since the device for separating deposits on a membrane surface according to Japanese Patent No. 3014248 performs air diffusion all over the hollow fiber membranes from diffuser openings on a diffuser plate, it is necessary to dispose adjoining sheet-like planar hollow fiber membrane modules so as to be spaced from each other to some extent, in order to perform air diffusion sufficiently. Thus, it was difficult to provide membranes in high density. Accordingly, the volume of the portion where membranes are provided became large, which led to the upsizing of the filtration device. Further, there was a problem that, by only performing overall air diffusion from the lower part of the membrane module, only the surface of the hollow fiber membranes was exposed to air diffusion, so that air diffusion to between membranes, particularly to the vicinity of catchment portion where blockage of the membranes progresses became insufficient.

Further, a device for separating deposits on membrane surface according to Japanese Laid-Open Patent (kokai) Publication No. Hei 8-215548 has an air diffusion structure at one end of the membrane module by which air is diffused through air diffusion openings, so that air is only diffused to the outer surface of the hollow fiber membrane, but not to the inner surface thereof, which was not considered to be sufficient in terms of cleaning efficiency. In addition, there was a problem that the device was not applied to a membrane module in which a multiplicity of hollow fiber membranes are arranged in a bundle in a round shape.

Moreover, a device for separating deposits on membrane surface according to Japanese Patent Publication No. Hei 7-61420 merely has a structure in which a plurality of porous pipes are mixed into the bundle of hollow fibers in which a multiplicity of hollow fiber filtration membranes are arranged in a round shape, which caused a problem of insufficient air diffusion to between membranes.

In either case, when the number of hollow fiber membranes constituting a membrane module becomes large, the cleaning efficiency becomes worsened. Therefore, there was a limitation for the number of hollow fiber membranes constituting a membrane module, and accordingly there was also a limitation for the improvement of filtration efficiency.

Thus, the present invention aims to provide a compact filtration device capable of efficiently separate and remove suspension components adhered to membrane surfaces or to between membranes by allowing bubbling action by means of bubbles from an air diffusion tube to effectively affect the entire hollow fiber membrane, and capable of disposing inside hollow fiber membranes in high density.

US 5783083 describes a vertical cylindrical skein of hollow fiber membranes and method of maintaining clean fiber surfaces. JP 7185268 describes a hollow fiber filter membrane element and module. Both disclosures describe a plurality of aeration tubes in a direction across the fibre axis in the lower part of the bundle in a star-like configuration.

### Disclosure of the Invention

The filtration device of the present invention is a filtration device for performing solid-liquid separation by immersion type suction filtration or external pressure filtration by allowing a liquid containing suspension components to permeate a membrane module, the filtration device comprising: a membrane module comprising bundled membranes in which a multiplicity of hollow fiber membranes with vertical axes are contacted closely with each other at the upper and lower ends thereof, and a plurality of diffuser tubes for performing bubbling with bubbles inserted co-directionally between the multiplicity of hollow fiber membranes across the axes of the hollow fiber membranes from one side of the lower part of the bundled membrane.

Further, the above diffuser tube may be formed from tube bodies having a small diameter with their tips chamfered to have a round shape, may have its tip or entire body being coated with a protective tube, and may have a diffuser opening being open at its tip. In addition, a plurality of diffuser tubes inserted between a multiplicity of hollow fiber membranes of the above bundled membrane may be varied in their lengths of insertion into the hollow fiber membranes.

According to the filtration device of the present invention, the vibration occurring during the time when bubbles jetted from a diffusion tube rise can be transmitted to the entire bundled membrane, and suspension components deposited on membrane surfaces or between membranes can be efficiently separated and removed. Further, since the diffuser tube is formed from tube bodies having a small diameter capable of threading into between the hollow fiber membranes for insertion, not much space for disposition is required even if a plurality of diffuser tubes are inserted into a single bundled membrane, so that hollow fiber membranes can be disposed in a high density, thereby allowing the improvement of filtration performance, while achieving the downsizing of the filtration device.

### Brief Description of the Drawings

Fig. 1 is a schematic front view showing one embodiment in which a filtration device of the present invention is applied to an immersion type suction filtration device.
Fig. 2 is a schematic plan view of the same filtration device.
Fig. 3 is a plan view showing the relationship between the bundled membrane and the diffusion tubes.

### Best Mode for Carrying Out the Invention

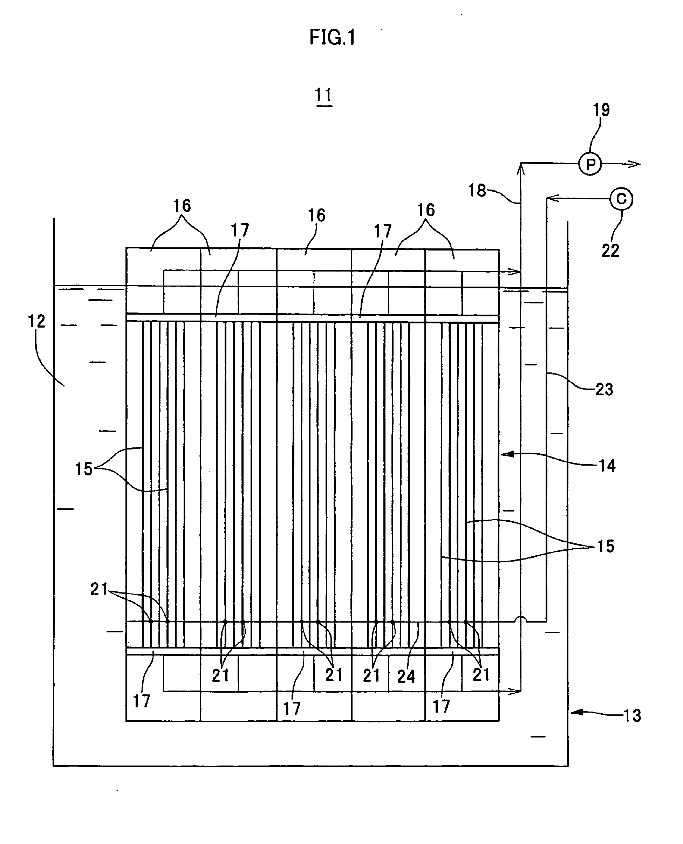

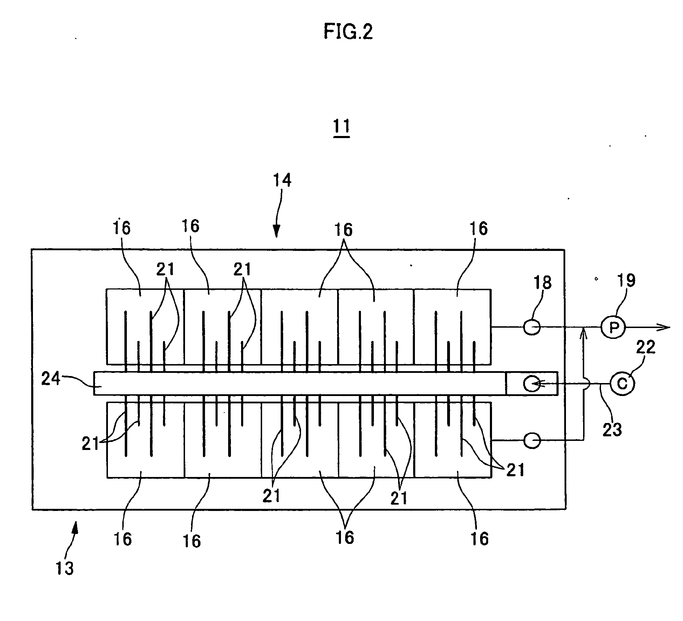

The filtration device of the present invention will be described in more detail based on Figs. 1 to 3 which show one embodiment in which the device is applied to an immersion type suction filtration device. Reference numbers used in Figs. 1 to 3 are as follows: 11 ... Filtration device; 12 ... Liquid to be treated; 13 ... Immersion tank; 14 ... Membrane module; 15 ... Hollow fiber membrane; 16 ... Bundled membrane; 17 ... Catchment portion; 18 ... Treated liquid discharge tube; 19 ... pump; 21 ... Diffuser tube; 22 ... Air compressor; 23 ... Air induction tube; 24 ... Header; 25 ... Diffuser opening

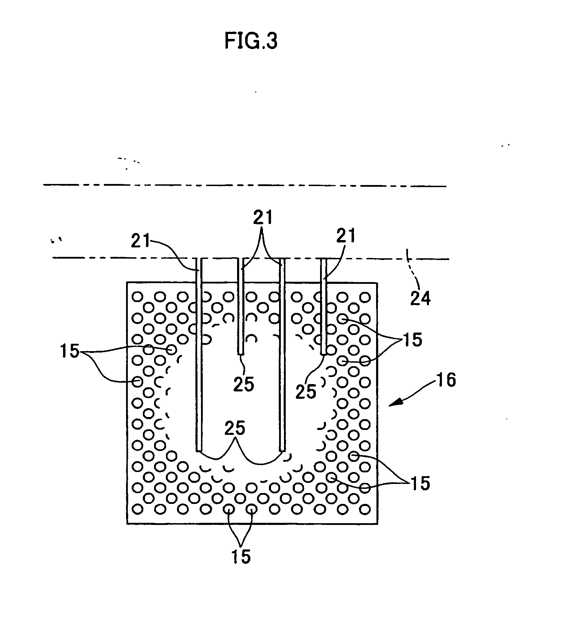

In the filtration device 11 shown in the present embodiment, a membrane module 14 is disposed in an immersed manner in an immersion tank 13 filled with a liquid to be treated 12 which was introduced. The membrane module 14 is formed from the combination of ten bundled membranes 16 aligned in two rows each having five, in each of which a multiplicity of hollow fiber membranes 15 with their axes being in the vertical direction are contacted closely with each other at the upper and lower ends thereof. As shown in Fig. 3, each of the bundled membranes 16 is formed from a multiplicity of hollow fiber membranes 15 such that the horizontal section thereof has a rectangular shape. Each of the bundled membranes 16 is in communication with a treated liquid discharge tube 18 via a catchment portion 17 which holds the ends of the hollow fiber membranes 15 in an open state at the upper and lower ends thereof. In addition, filtration operation with the hollow fiber membranes 15 is performed by sucking the interior of the treated liquid discharge tube 18 with pump 19 so as to depressurize the inside of the hollow fiber membranes 15.

Further, at the lower part of the bundled membrane 16, diffuser tubes 21 are inserted between the above multiplicity of hollow fiber membranes 15. This diffuser tube 21 is connected to an air induction tube 23 provided with an air compressor 22 via a header 24, and is formed such that air compressed by the air compressor 22 is jetted from an diffuser opening 25 provided at the tip of the diffuser tube 21. The diffuser tube 21 can be formed from metal materials such as stainless steel, or from rigid plastic materials such as polyvinyl chloride, etc. In order to push to widen the hollow fiber membranes 15 of the bundled membrane 16 for changing its shape and to thread into between the hollow fiber membranes 15 for insertion, and in order not to harm the hollow fiber membranes 15, the shape of the diffuser tube 21 is preferably such that it is formed from tube bodies having a small diameter with their tips being chamfered to have a round shape and that the tip and entire body thereof are coated with a protective tube. The number of the diffuser tubes 21 and the gap therebetween in a single bundled membrane 16 and the position of the diffuser opening 25 can be appropriately set in accordance with conditions such as the horizontal sectional shape and sectional area of the bundled membrane 16. The diffuser tubes 21 inserted into the single bundled membrane 16 preferably have varied lengths as shown in Fig. 3. Further, the diffuser tube 21 may be provided between the single bundled membrane 16 and the adjoining bundled membrane 16.

A diffuser opening 25 to be provided on the diffuser tube 21 can be provided at a random position. A diffuser opening 25 may be perforated at the side of the tube with its tip being closed. It is possible to easily produce the diffuser tube 21 by allowing the tip of the tube to open as it is to jet air in the axial direction. In addition, the number of the diffuser tubes 25 is sufficiently provided at one location at its tip, but it may be provided at a plurality of locations as needed. Further, the diffuser tube 21 is usually formed from a straight tube, but it allows slight bending.

Materials for the above hollow fiber membrane 15 are not particularly limited, but the one formed from various materials can be used such as polysulfone-type resins, polyacrylonitrile, cellulose derivatives, polyolefins including polyethylene, polypropylene, etc., polyvinyl alcohol-type resin, polysulfone-type resins, fluorine-type resins including polytetrafluoroethylene, polyvinyliden fluoride, etc., polyamide, polyester, polymethacrylate, polyacrylate, and so on. In addition, copolymers of these resins or those having a substituent being partially introduced may be used, and further resins prepared by mixing two or more resins may also be used.

Further, for a fixed member for holding the end of the hollow fiber membranes 15 in an open state, usually liquid resins such as epoxy resins, unsaturated polyester resins, polyurethane resins, and so on are cured to be used. Moreover, for the catchment portion 17, a material having mechanical strength and endurance would be sufficient. For example, materials such as polycarbonate, polysulfone, polyolefin, polyvinyl chloride, acrylic resin, ABS resin, modified PPE resin, and so on can be used.

In the filtration device thus formed, by actuating a pump 19, filtration operation is carried out in which solid-liquid separation is performed for a liquid to be treated 12 flowed into the immersion vase 13 with the hollow fiber membranes 15, so that suspension components in the liquid to be treated 12 are caught on the surface of the hollow fiber membranes 15, and the treated liquid from which the suspension components are separated and removed goes through the inside of the hollow fiber membranes 15 to be sucked into the treated liquid discharge tube 18 for recovery.

Due to the continuation of such filtration operation, suspension components are gradually deposited on the surface of the hollow fiber membranes 15 and between the membranes, which causes the lowering of permeation flow rate in the hollow fiber membranes 15 and the reduction of the suction pressure of the pump 19. Accordingly, bubbling cleaning operation is performed for separating to remove the suspension components deposited on the surface of the hollow fiber membranes or between the membranes periodically or in accordance with the suction pressure of the pump 19.

The bubbling cleaning operation is performed by operating the air compressor 22 to supply compressed air to the diffused tube 21 via the air induction tube 23 and the header 24, and jetting bubbles to the lower part of the bundled membrane 16 from the diffuser opening 25 provided at the diffuser tube 21. At this time, the diffuser tube 21 is threaded into between the hollow fiber membranes 15 at the lower part of the bundled membrane 16 for insertion. Since the diffuser openings 25 are disposed inside the bundled membrane 16, the bubbles jetted from the diffuser opening 25 rise the inside of the bundled membrane 16.

Further, since the bubbles rise among the hollow fiber membranes 15 which are in a state of congestion, it is hard for them to be large bubbles. In addition, since fine bubbles rise upward moving among the membranes in a complicated manner, subtle vibrations occurring during the time when the bubbles rise among the membranes are transmitted to the entire hollow fiber membranes 15 constituting the bundled membrane 16 directly by bubbles from the inside of the bundled membrane 16 or indirectly by the movement of water in the space present between the hollow fiber membranes 15. Thus, suspension materials disposed on the surface of the hollow fiber membranes and between the membranes can be efficiently separated and removed by effectively vibrating the membranes. Accordingly, cleaning efficiency in the bubbling cleaning operation can be improved to a large extent. Further, the jetting of air into the bundled membrane 16 either may be performed continuously or may be performed intermittently.

Moreover, compared with a porous pipe having a relatively large diameter inserted into a bundled membrane as described in the above-mentioned Japanese Patent Publication No. Hei 7-61420, a thinner diffuser tube 21 can be used, so that the number of the hollow fiber membranes 15 to be provided per unit sectional area in the bundled membrane 16 can be increased and thus the area of membranes per volume in the entire filtration device is enlarged, thereby improving filtration performance, while achieving the downsizing of the filtration device. Further, due to the improvement of cleaning efficiency, effective bubbling cleaning operation can be performed with less volume of air, so that the volume of air for cleaning per area in which membranes are provided can be decreased compared with prior art.

It should be noted that, in the above embodiment, an explanation is given to an example in which the present invention is applied to an immersion type suction filtration device, but equivalent function/effect can also be achieved by applying it to an external pressure filtration device.

## Claims

1. A filtration device (11) for performing solid-liquid separation by immersion type suction filtration or external pressure filtration by allowing a liquid containing suspension components to permeate a membrane module, the filtration device (11) comprising:
a membrane module (14) comprising bundled membranes (16) in which a multiplicity of hollow fiber membranes (15) with vertical axes are contacted closely with each other at the upper and lower ends thereof, and
a plurality of diffuser tubes (21) for performing bubbling with bubbles inserted co-directionally between the multiplicity of hollow fiber membranes (15) across the axes of the hollow fiber membranes (15) from one side of the lower part of the bundled membrane (16).

2. The filtration device according to Claim 1, wherein the diffuser tubes (21) comprise tube bodies with chamfered tips having a round shape.

3. The filtration device according to claim 1, wherein the plurality of diffuser tubes (21) are varied in their lengths of insertion into the hollow fiber membranes (15).

4. The filtration device according to claim 1, wherein the diffuser tubes (21) have a diffuser opening (25) being open at their tip.

## Patentansprüche

1. Filtriereinrichtung (11) zum Durchführen einer Feststoff-Flüssigkeits-Trennung durch Tauch-Saugfiltration oder Außendruckfiltration, indem es einer Flüssigkeit, die Suspensionskomponenten enthält, ermöglicht wird, ein Membranmodul zu durchdringen, wobei die Filtriereinrichtung (11) umfasst:
ein Membranmodul (14), das gebündelte Membranen (16) enthält, in denen viele Hohlfasermembranen (15) mit vertikalen Achsen an deren oberen und unteren Enden zueinander in enger Berührung stehen, und
mehrere Diffusorröhren (21) zum Durchführen eines Schäumens mit Blasen, die gleich gerichtet zwischen den vielen Hohlfasermembranen (15) über die Achsen der Hohlfasermembranen (15) von einer Seite des unteren Teils der gebündelten Membran (16) eingefügt sind.

2. Filtriereinrichtung nach Anspruch 1, bei der die Diffusorröhren (21) Röhrenkörper mit abgeschrägten Spitzen, die eine runde Form aufweisen, umfassen.

3. Filtriereinrichtung nach Anspruch 1, bei der sich die mehreren Diffusorröhren (21) in deren Längen der Einfügung in die Hohlfasermembranen (15) unterscheiden.

4. Filtriereinrichtung nach Anspruch 1, bei der die Diffusorröhren (21) eine Diffusoröffnung (25) aufweisen, die an deren Spitze offen ist.

## Revendications

1. Dispositif de filtration (11) destiné à réaliser une séparation solide-liquide par filtration par aspiration du type à immersion ou filtration sous pression externe en permettant à un liquide contenant des composants en suspension de passer à travers un module de membrane, le dispositif de filtration (11) comportant :
un module de membrane (14) comportant des membranes en faisceau (16) dans lequel les membranes d'une multiplicité de membranes à fibre creuse (15) avec des axes verticaux sont en contact étroit l'une avec l'autre au niveau des extrémités supérieure et inférieure, et
une multiplicité de tubes de diffuseur (21) pour la réalisation d'un bouillonnement avec des bulles insérés de manière co-directionnelle entre la multiplicité de membranes à fibre creuse (15) à travers les axes des membranes à fibre creuse (15) depuis un côté de la partie inférieure de la membrane en faisceau (16).

2. Dispositif de filtration selon la revendication 1, dans lequel les tubes de diffuseur (21) comportent des corps de tube avec des bouts chanfreinés ayant une forme ronde.

3. Dispositif de filtration selon la revendication 1, dans lequel la multiplicité de tubes de diffuseur (21) est modifiée sur le plan de leurs longueurs d'insertion dans les membranes à fibre creuse (15).

4. Dispositif de filtration selon la revendication 1, dans lequel les tubes de diffuseur (21) ont une ouverture de diffuseur (25) qui est ouverte au niveau de leur bout.
